Europäisches Patentamt

European Patent Office

Office européen des brevets

(11) Veröffentlichungsnummer: **0 440 852 B1**

## (12) EUROPÄISCHE PATENTSCHRIFT

(45) Veröffentlichungstag der Patentschrift: **18.05.94**

(21) Anmeldenummer: **90102429.9**

(22) Anmeldetag: **07.02.90**

(51) Int. Cl.5: **H02M 7/5387**, H02M 5/458, H02M 7/529

(54) Steuerverfahren und Steuersatz zur Dämpfung von Resonanzschwingungen eines Parallelschwingkreises für einen Pulswechselrichter eines Stromzwischenkreisumrichters.

(43) Veröffentlichungstag der Anmeldung:
**14.08.91 Patentblatt 91/33**

(45) Bekanntmachung des Hinweises auf die Patenterteilung:
**18.05.94 Patentblatt 94/20**

(84) Benannte Vertragsstaaten:
**CH DE FR GB IT LI SE**

(56) Entgegenhaltungen:
**EP-A- 0 259 240**

**IEEE TRANSACTIONS ON APPLICATIONS AND INDUSTRY, vol. 25, no. 1, 28 Februar 1989, New York, US, Seiten 76-84; S. NONAKA ET AL.: "A PWM GTO CURRENT SOURCE CONVERTER-INVERTER SYSTEM WITH SINUSOIDAL INPUTS AND OUTPUTS"**

**CONF. REC. OF THE 1987 IEEE IND. APPL. SOC. ANNUAL MEETING, vol. Part 1, 23. Oktober 1987, New York, US, Seiten 303-311 ; P. ENJETTI ET AL. : "A NEW PWM SPEED CONTROL SYSTEM FOR HIGH PERFORMANCE AC MOTOR DRIVES"**

**IEEE Transactions on Industry Applications,Vol. IA-21, Mo. 5, September/Oktober 1985, Seiten 1192-1198; Hombu et al: "A new current source GTO inverter with sinusoidal output voltage and current."**

(73) Patentinhaber: **SIEMENS AKTIENGESELLSCHAFT**
**Wittelsbacherplatz 2**
**D-80333 München(DE)**

(72) Erfinder: **Heinle, Georg, Dipl.-Ing.**
**Moorbachweg 14**
**D-8520 Erlangen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Steuerverfahren und einen Steuersatz zur Dämpfung von Resonanzschwingungen eines Parallelschwingkreises für einen Pulswechselrichter eines Stromzwischenkreisumrichters, wobei der Pulswechselrichter abschaltbare Stromrichterventile enthält und mit einer induktiven und einer kapazitiven Last verknüpft ist, wobei diese induktive und kapazitive Last den Parallelschwingkreis bilden, dessen Resonanzfrequenz einem Vielfachen der Betriebsfrequenz des Pulswechselrichters entspricht, und wobei der Pulswechselrichter nach vorbestimmten abgespeicherten Modulations-Moden gesteuert wird.

Aus dem Aufsatz "A new current source GTO inverter with sinusoidal output voltage and current", abgedruckt in der Zeitschrift "IEEE Trans. on Ind Appl.", Vol. IA-21, No.5, Sept./Oct. 1985, Seiten 1192 bis 1198, ist ein stromeinprägender Umrichter bekannt, der aus einem netzseitigen Stromrichter, einer Zwischenkreisdrossel und einem lastseitigen Stromrichter besteht. Dieser Umrichter ist mit einer induktiven Last beispielsweise ein Asynchronmotor, versehen, zu der elektrisch parallel eine kapazitive Last, bestehend aus drei in Stern geschalteten Kondensatoren, geschaltet ist. Der lastseitige Stromrichter wird nach vorbestimmten abgespeicherten Modulations-Moden gesteuert. Als Stromrichterventile für die beiden Stromrichter sind abschaltbare Thyristoren vorgesehen.

Durch die Verwendung einer kapazitiven Last elektrisch parallel zur induktiven Last des Pulswechselrichters eines Stromzwischenkreisumrichters entsteht ein Parallelschwingkreis, dessen Resonanzfrequenz ein Vielfaches der Betriebsnennfrequenz $f_{1n}$ beträgt. Durch die Verwendung von vorberechneten Modulations-Moden, beispielsweise 3-fach-Pulsung, 5-fach-Pulsung, 7-fach-Pulsung, kommt es im oberen Betriebsfrequenzbereich vor, daß beispielsweise die Frequenz der fünften oder siebten Oberwelle bzw. die Frequenz der elften oder dreizehnten Oberwelle in unmittelbare Nähe zur Resonanzfrequenz $f_{res}$ des Parallelschwingkreises kommen. Dadurch wird der Resonanzkreis stark angeregt, wodurch der Laststrom Resonanzschwingungen aufweist. Durch diese Resonanzschwingungen im Laststrom erhöht sich die Verlustleistung der Last erheblich.

Die starke Anregung des Resonsanzkreises im oberen Betriebsfrequenzbereich kann dadurch verringert werden, daß man in diesem Betriebsfrequenzbereich ein Modulations-Mode mit hoher Pulsung, beispielsweise eine 13-fache-Pulsung, verwendet. Dabei sind die Schaltwinkel und damit die Steuerzeiten so vorberechnet, daß die Amplituden der Oberschwingungen möglichst klein sind. Nachteilig dabei ist aber, daß für den mittleren und unteren Betriebsfrequenzbereich die Modulations-Moden noch höhere Pulsungen aufweisen oder aber der gesamte untere Betriebsfrequenzbereich muß asynchron gesteuert werden. Außerdem steigt der Aufwand für vorberechnete, optimierte Pulsmuster mit der Pulszahl, sondern auch die Verlustleistung des Pulswechselrichters.

Aus dem Aufsatz "A PWM GTO current source converter-invertor system with sinusoidal inputs and outputs", abgedruckt in der Zeitschrift "IEEE Trans. on Appl. and Ind.", Vol.25, No.1, 28. Feb. 1989, Seiten 76 bis 84, ist ein stromprägender Umrichter bekannt, der durch einen besonderen Aufbau und eine zugehörige Steuerung das angesprochene Problem der Resonanz löst. Der netzseitige und der lastseitige Stromrichter weisen jeweils eine kapazitive Last, bestehend aus drei in Stern geschalteten Kondensatoren, auf, deren Sternpunkte jeweils mittels zweier Hilfsstromrichterventile mit der positiven und negativen Zwischenkreis-Stromschiene verbindbar sind. Auch dieser Umrichter verwendet als Stromrichterventile abschaltbare Thyristoren und wird mittels vorbestimmter abgespeicherter Pulsmuster gesteuert. Gegenüber herkömmlichen vorberechneten Pulsmustern sind bei diesen Pulsmustern zusätzliche Pulsmuster für die Hilfsstromrichterventile vorhanden.

Diese abgespeicherten optimierten Pulsmuster werden in Abhängigkeit eines berechneten Modulationsindexes ausgewählt.

Der Erfindung liegt nun die Aufgabe zugrunde, ein Steuerverfahren zur Dämpfung dieser Resonanzschwingungen und einen Steuersatz für einen Pulswechselrichter eines Stromzwischenkreisumrichters anzugeben, wobei insbesondere im oberen Betriebsfrequenzbereich auch ein Modulations-Mode niederiger Pulszahl verwendet werden kann.

Diese Aufgabe wird erfindungsgemäß dadurch gelöst, daß mittels einer Betriebsfrequenz eines Umrichterstromes ein Modulations-Mode aus mehreren abgespeicherten Modulations-Moden ausgewählt wird und daß in Abhängigkeit eines gebildeten Faktors und des ausgewählten Modulations-Modes Schaltwinkel mittels abgespeicherter, vorbestimmter Schaltwinkelkennlinien betriebsfrequenzabhängig bestimmt werden, mit denen dann die Steuerzeiten für den Pulswechselrichter erzeugt werden.

Durch dieses Steuerverfahren wird erreicht, daß betriebsfrequenzabhängige Modulations-Moden mit verschiendenen Pulszahlen innerhalb eines Modulations-Mode das Pulsmuster bzw. die Schaltwinkel in Abhängigkeit der Betriebsfrequenz veränderbar sind. D.h., daß die Impulsflanken eines ausgewählten Modulations-Modes mit der Betriebsfrequenz bzw. mit dem Frequenzabstand zur Resonanzfrequenz frequenzabhängig verstellt werden.

Dadurch wird erreicht, daß ein für eine bestimmte Betriebsfrequenz optimierter Modulations-Mode nicht nur für diese Betriebsfrequenz, sondern für jede Betriebsfrequenz innerhalb eines durch dieses Modulations-Modes festgelegten Betriebsfrequenzbereiches minimale Oberschwingungsamplituden aufweisen. D .h., man kann innerhalb eines Betriebsfrequenzbereiches den Modulations-Mode für jede Betriebsfrequenz innerhalb dieses Betriebsfrequenzbereiches auf minimale Oberschwingungsamplituden steuern. Somit werden Resonanzschwingungen über den gesamten Betriebsfrequenzbereich, insbesondere dem oberen Betriebsfrequenzbereich, ausreichend gedämpft, ohne dabei ein Modulations-Mode höherer Pulszahl zu verwenden.

Die Ermittlung der einzelnen Schaltwinkelkennlinien sind den Unteransprüchen 2 bis 4 zu entnehmen.

Die Ausführungsform eines Steuersatzes zur Durchführung dieses Steuerverfahrens für einen Pulswechselrichter eines Stromzwischenkreisumrichters, wobei der Pulswechselrichter abschaltbare Stromrichterventile enthält und mit einer induktiven und mit einer kapazitiven Last verknüpft ist, ist dem Anspruch 5 zu entnehmen, wobei eine besondere Ausführungsform dem Anspruch 6 zu entnehmen ist.

Zur weiteren Erläuterung der Erfindung wird auf die Zeichnung Bezug genommen, in der eine Ausführungsform des Steuersatzes zur Durchführung des erfindungsgemäßen Steuerverfahrens zur Dämpfung von Resonanzschwingungen schematisch veranschaulicht ist.

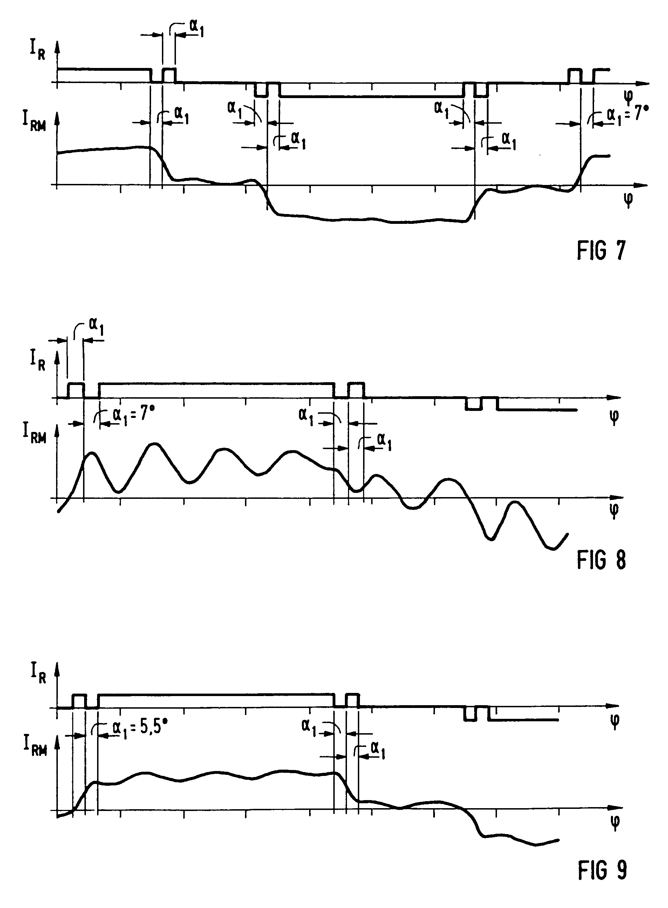

Figur 1
zeigt einen Steuersatz und den zugehörigen Stromzwischenkreisumrichter, in
Figur 2
ist eine Steuerkennlinie in einem Diagramm über der Betriebsfrequenz $f_1$ dargestellt, in den
Figuren 3 bis 5
sind verschiedene Modulations-Moden (3-fach-, 5-fach- und 7-fach-Pulsung) jeweils in einem Diagramm über dem Phasenwinkel $\phi$ veranschaulicht, in
Figur 6
sind Schaltwinkelkennlinien des Schaltwinkels $\alpha_1$ eines Modulations-Mode mit 3-fach-Pulsung in einem Diagramm über dem Faktor $f_1/f_{res}$ dargestellt, in
Figur 7
ist jeweils in einem Diagramm über dem Phasenwinkel $\phi$ der Umrichterstrom und der Laststrom für ein optimiertes Modulations-Mode mit 3-fach-Pulsung bei einer Betriebsfrequenz $f_1$ = 50 Hz dargestellt, in
Figur 8
ist ebenfalls der Umrichterstrom und der zugehörige Laststrom bei einem Modulations-Mode gemäß Figur 7, jedoch bei einer Betriebsfrequenz $f_1$ = 40 Hz jeweils in einem Diagramm über dem dargestellten Phasenwinkel $\phi$ und in der
Figur 9
ist jeweils in einem Diagramm über dem Phasenwinkel $\phi$ der Umrichterstrom und der Laststrom für ein Modulations-Mode mit 3-fach-Pulsung bei einer Betriebsfrequenz $f_1$ = 40 Hz dargestellt, wobei der Schaltwinkel $\alpha_1$ mittels des Steuerverfahrens ermittelt ist.

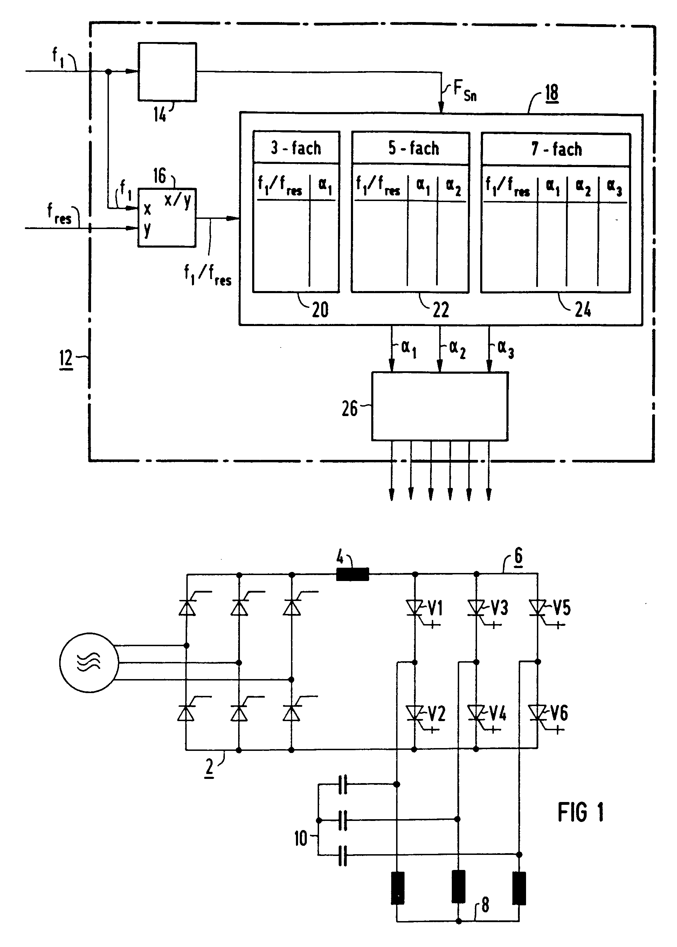

In Figur 1 ist ein Stromzwischenkreisumrichter, bestehend aus einem selbstgeführten Netzstromrichter 2, einer Induktivität 4 und einem Pulswechselrichter 6, dargestellt. Der Pulswechselrichter 6 ist mit einer induktiven Last 8, beispielsweise ein Asynchronmotor, versehen, zu der elektrisch parallel eine kapazitive Last 10, bestehend aus drei im Stern geschaltete Kondensatoren, geschaltet ist. Der Wechselrichter 6 besteht aus einem konventionellen Stromrichter in B6-Schaltung. Als Stromrichterventile V1 bis V6 sind abschaltbare Stromrichterventile, beispielsweise Transistoren oder abschaltbare Thyristoren (Gate-Turn-Off-Thyristoren) vorgesehen. Durch die Kondensatoren entsteht zusammen mit der induktiven Last ein Parallelschwingkreis, dessen Resonsanzfrequenz $f_{res}$ einem Vielfachen der Betriebsnennfrequenz $f_{1n}$ entspricht.

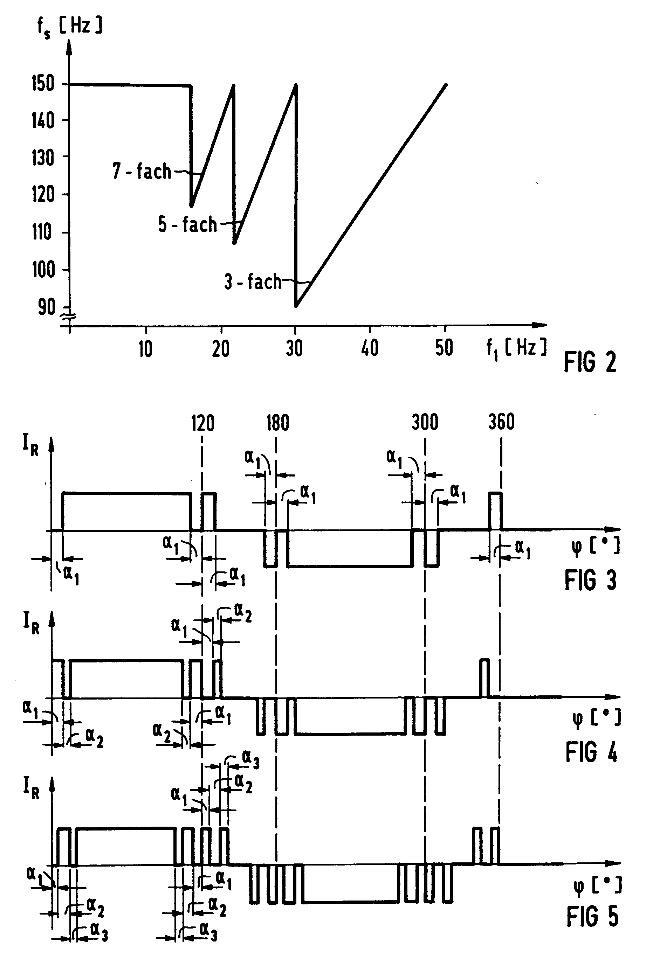

Die Steuerzeiten bzw. die Ansteuersignale für die abschaltbaren Stromrichterventile V1 bis V6 werden von dem Steuersatz 12 erzeugt. Diesem Steuersatz 12 wird eingangsseitig die Betriebsfrequenz $f_1$ und die Resonanzfrequenz $f_{res}$ zugeführt. Diese Betriebsfrequenz $f_1$ ist einerseits einer Einrichtung 14 zur Erkennung eines Betriebsfrequenzbereiches und andererseits einem ersten Eingang eines Quotientenbildners 16 zugeführt. Am zweiten Eingang des Quotientenbildners 16 steht die zugeführte Resonanzfrequenz $f_{res}$ an. Die Einrichtung 14 zur Erkennung eines Betriebsfrequenzbereiches kann beispielsweise aus mehreren Fensterkomparatoren aufgebaut sein, wobei deren Anzahl von der Anzahl der Betriebsfrequenzbereiche abhängt. In der dargestellten Ausführungsform ist der gesamte Betriebsfrequenzbereich 0 Hz $\leq f_1 \leq$ 50 Hz, gemäß der Steuerkennlinie nach Figur 2, in drei Bereiche aufgeteilt. Am Ausgang der Einrichtung 14 steht ein Signal $F_{Sn}$ an, das einen Betriebsfrequenzbereich angibt. Der Quotientenbildner 16 bildet den Faktor $f_1/f_{res}$, der das Verhältnis der Betriebsfrequenz $f_1$ zur Resonanzfrequenz $f_{res}$ angibt. Die Resonanzfrequenz $f_{res}$ des genannten Antriebs ist eine Konstante. Dadurch kann anstelle des Quotientenbildners 16 ein Konstantglied verwendet werden, mit dem die Betriebsfrequenz $f_1$ gewichtet wird. Dieser Faktor $f_1/f_{res}$ und das Signal $F_{Sn}$ werden einem Speicher 18 zugeführt, in dem mehrere Kennlinien jeweils in Form einer Tabelle 20, 22 und 24 abgespeichert sind. Am Ausgang dieses Speichers 18 stehen Schaltwinkel $\alpha_1$ bzw. $\alpha_1$ und $\alpha_2$ bzw. $\alpha_1$, $\alpha_2$ und $\alpha_3$ an, die in Abhängigkeit des Faktors $f_1/f_{res}$ und des Signals $F_{Sn}$ aus einer der drei abgespeicherten Kennlinien ausgelesen werden. Diese Schaltwinkel $\alpha_1$ bzw. $\alpha_1$ und $\alpha_2$ bzw. $\alpha_1$, $\alpha_2$ und $\alpha_3$ sind einer Einrichtung 26 zur Erzeugung von Steuerzeiten zugeführt. Im einfachsten Fall ist als Einrichtung 26 ein Mikrocomputer vorgesehen. Diese ermittelten Steuerzeiten bzw. Ansteuersignale gelangen jeweils über einen Ansteuerkreis zu den abschaltbaren Stromrichterventilen V1 bis V6.

In den Figuren 3 bis 5 ist näher veranschaulicht, wie aus den Schaltwinkeln $\alpha_1$ bzw. $\alpha_1$ und $\alpha_2$ bzw. $\alpha_1$, $\alpha_2$ und $\alpha_3$ beispielsweise Modulations-Moden mit 3-fach- bzw. 5-fach- bzw. 7-fach-Pulsung erzeugt werden. Die Erzeugung von Steuerzeiten aus Schaltwinkeln ist allgemein bekannt.

In Figur 2 ist eine Steuerkennlinie in einem Diagramm über der Betriebsfrequenz $f_1$ dargestellt. Im Frequenzbereich 0 Hz $\leq f_1 \leq$ 17 Hz findet eine asynchrone Steuerung statt. In dem daran anschließenden Frequenzbereich 17 Hz $\leq f_1 \leq$ 21 Hz wird synchron gesteuert, wobei sieben Stromblöcke pro Halbschwingung auftreten. Im Frequenzbereich 21 Hz $\leq f_1 \leq$ 30 Hz wird mit einer 5-fach-Pulsung gesteuert, wogegen im Frequenzbereich 30 Hz $\leq f_1 \leq$ 50 Hz mit einer 3-fach-Pulsung gesteuert wird. Diese Frequenzbereiche sind beispielhaft angegeben. Derartige Kennlinien sind in der Literatur ausreichend beschrieben.

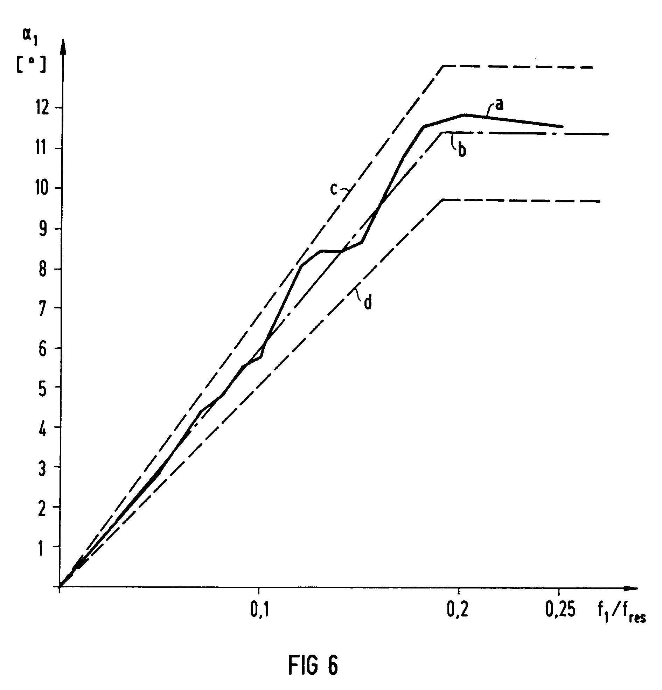

In Figur 6 sind Schaltwinkelkennlinien des Schaltwinkels $\alpha_1$ für eine 3-fach-Pulsung in einem Diagramm über dem Faktor $f_1/f_{res}$ dargestellt. Dabei stellt die durchgezogene Kennlinie a den idealen Schaltwinkelverlauf dar, die in guter Näherung durch die Kennlinie b ersetzt werden kann. Außerdem kann man auch den Verlauf der Kennlinie b innerhalb der Grenzkennlinien c und d verschieben, ohne dabei das Ergebnis, nämlich die Dämpfung von Resonanzschwingungen, zu verschlechtern. Diese Schaltwinkelkennlinie b besteht aus zwei Geradenabschnitten, die beim Faktor $f_1/f_{res}$ = 0,19 ineinander übergehen. Der erste Geradenabschnitt wird durch folgende Geradengleichung $\alpha_{1n}$ = 60 $f_1/f_{res}$ mit 0 $\leq f_1/f_{res} \leq$ 0,19 betimmt, wobei der zweite Geradenabschnitt durch $\alpha_{1n}$ = 11,4° für $f_1/f_{res}>$0,19 bestimmt ist. Die obere bzw. untere Grenzkennlinie ist ebenfalls mittels zweier Geradengleichungen festgelegt. Für 0 $\leq f_1/f_{res} \leq$ 0,19 gilt die Gleichung $\alpha_{1o}$ = 1,2•60•$f_1/f_{res}$ bzw. $\alpha_{1u}$ = 0,8•60•$f_1/f_{res}$ und für $f_1/f_{res}$ > 0,19 gilt die Gleichung $\alpha_{1o}$ = 13,7° bzw. $\alpha_{1.u}$=9.1°. Diese Geradengleichungen der Näherungskennlinie b und die obere bzw. untere Grenzkennlinie c bzw. d gelten nur für eine 3-fach-Pulsung. Für eine 5-fach-Pulsung gelten folgende Gleichungen:
Näherungsschaltwinkelkennlinie:

$\alpha_{1n}$ = 98 $f_1/f_{res}$ für 0 $\leq f_1/f_{res} \leq$ 0,12
$\alpha_{1n}$ = 11,8° für $f_1/f_{res}$ > 0,12
$\alpha_{2n}$ = 51,5°•$f_1/f_{res}$-114$(f_1/f_{res})^2$ für 0 $\leq f_1/f_{res} \leq$ 0,2
$\alpha_{2n}$ = 5,74° für $f_1/f_{res}$ > 0,2

obere Grenzschaltwinkelkennlinie:

$\alpha_{1o}$ = 1,2•$\alpha_{1n}$
$\alpha_{2O}$ = 1,2•$\alpha_{2n}$

untere Grenzschaltwinkelkennlinie:

$\alpha_{1u}$ = 0,8•$\alpha_{1n}$
$\alpha_{2u}$ = 0,8•$\alpha_{2n}$.


Für eine 7-fach-Pulsung gelten folgende Gleichungen:
Näherungsschaltwinkelkennlinie:

$\alpha_{1n}$ = 79,4•$f_1/f_{res}$-210$(f_1/f_{res})^2$ für 0 $\leq f_1/f_{res} \leq$ 0,16
$\alpha_{1n}$ = 7,3° für $f_1/f_{res}$ > 0,16
$\alpha_{2n}$ = 113$f_1/f_{res}$-141$(f_1/f_{res})^2$ für 0 $\leq f_1/f_{res} \leq$ 0,15
$\alpha_{2n}$ = 14,75°-6,5•$f_1/f_{res}$ für $f_1/f_{res}$ > 0,15
$\alpha_{3n}$ = 33•$f_1/f_{res}$-70$(f_1/f_{res})^2$ für 0 $\leq f_1/f_{res} \leq$ 0,18
$\alpha_{3n}$ = 3,7° für $f_1/f_{res}$ > 0,18

obere Grenzschaltwinkelkennlinie:

$\alpha_{1o}$ = 1,2•$\alpha_{1n}$
$\alpha_{2o}$ = 1,2•$\alpha_{2n}$
$\alpha_{3o}$ = 1,2•$\alpha_{3n}$

untere Grenzschaltwinkelkennlinie:

$\alpha_{1u}$ = 0,8•$\alpha_{1n}$
$\alpha_{2u}$ = 0,8•$\alpha_{2n}$
$\alpha_{3u}$ = 0,8•$\alpha_{3n}$.

Diese Schaltwinkelkennlinien a, b, c und d zeigen, daß der Schaltwinkel $\alpha_1$ innerhalb eines vorbestimmten Betriebsfrequenzbereiches nicht einen festen Schaltwinkel $\alpha_1$ hat, wodurch im Frequenzbereich das Pulsmuster immer gleich ist, sondern in Abhängigkeit des Abstandes der Betriebsfrequenz $f_1$ und damit die Oberschwingungsfrequenz zur Resonanzfrequenz $f_{res}$ variieren. Dadurch erhält man zu jeder Betriebsfrequenz $f_1$ ein Pulsmuster mit konstanter Pulszahl (beispielsweise 3-fach-Pulsung), jedoch mit unterschiedlichen Schaltwinkeln $\alpha_1$. Somit können Schaltwinkel $\alpha_1$ bzw. $\alpha_1$ und $\alpha_2$ bzw. $\alpha_1$, $\alpha_2$ und $\alpha_3$ vorab mittels einer Näherungskennlinie, die innerhalb des durch die obere und untere Grenzkennlinie gebildeten Sektors liegen muß, berechnet und abgespeichert werden, wodurch zu jeder Betriebsfrequenz $f_1$ das Oberschwingungsspektrum ausreichend unterdrückt wird.

In der Figur 7 ist einerseits der Umrichterstrom $I_R$ und andererseits der Laststrom $I_{RM}$ jeweils in einem Diagramm über dem Phasenwinkel $\phi$ dargestellt. Der Umrichterstrom $I_R$ ist als Modulations-Mode mit 3-fach-Pulsung dargestellt, wobei der Schaltwinkel $\alpha_1 = 7°$ beträgt. Die Betriebsfrequenz $f_1$ beträgt 50 Hz, d.h., die Betriebsfrequenz $f_1$ befindet sich im vierten Betriebsfrequenzbereich gemäß der Steuerkennlinie nach Figur 2. Der Schaltwinkel $\alpha_1 = 7°$ ist so bemessen worden, daß für eine Betriebsfrequenz $f_1 = 50$ Hz der Laststrom $I_{RM}$ kaum eine Resonanzschwingung aufweist, d.h., die Oberschwingungsamplituden sind ausreichend unterdrückt.

Bei einem herkömmlichen Steuerverfahren bleiben in diesem Frequenzbereich bei Änderung der Betriebsfrequenz $f_1$ die Schaltwinkel $\alpha_1$, $\alpha_2$ und $\alpha_3$ bei einem ausgewählten Modulations-Mode erhalten. In Figur 8 ist der Umrichterstrom $I_R$ für eine Betriebsfrequenz $f_1 = 40$ Hz in einem Diagramm über dem Phasenwinkel dargestellt. Der zugehörige Laststrom $I_{RM}$ ist ebenfalls in einem Diagramm über dem Phasenwinkel $\phi$ in dieser Figur 8 dargestellt. Bei dieser Betriebsfrequenz $f_1 = 40$ Hz und mit unverändertem Schaltwinkel $\alpha_1 = 7°$ weist die Amplitude des Laststromes $I_{RM}$ erhebliche Resonanzschwingungen auf, wodurch sich die Amplitude des Laststromes $I_{RM}$ fast verdoppelt. Dadurch steigt in der Last 8 die Verlustleistung erheblich an.

In Figur 9 ist wiederum der Umrichterstrom $I_R$ für eine Betriebsfrequenz $f_1 = 40$ Hz und einem Modulations-Mode gemäß den Figuren 7 und 8 in einem Diagramm über dem Phasenwinkel $\phi$ dargestellt. Bei diesem Modulations-Mode mit 3-fach-Pulsung ist jedoch der Schaltwinkel $\alpha_1$ auf 5,5° verringert worden. Der zugehörige Laststrom $I_{RM}$ ist ebenfalls in einem Diagramm über dem Phasenwinkel in dieser Figur dargestellt. Im Vergleich mit dem Laststrom $I_{RM}$ gemäß Figur 8 ist die Resonanzschwingung des Laststromes $I_{RM}$ gemäß Figur 9 geheblich gedämpft worden.

Bei einer Betriebsfrequenz $f_1 = 50$ Hz und einer Resonanzfrequenz $f_{res} = 440$ Hz ist die siebte und die elfte Oberschwingung in der Nähe der Resonanzfrequenz $f_{res}$ des beschalteten Wechselrichters 6 angeordnet. Wenn nun die Betriebsfrequenz $f_1$ auf 40 Hz verringert wird, so verschieben sich auch die Frequenzen der Oberschwingungen in bezug zur Resonanzfrequenz $f_{res}$. Bei einer Betriebsfrequenz $f_1 = 40$ Hz und einer Resonanzfrequenz $f_{res} = 440$ Hz ist die Frequenz der elften Oberschwingung gleich der Resonanzfrequenz $f_{res}$. Dadurch wird der Parallelschwingkreis sehr stark angeregt, wodurch der Laststrom $I_{RM}$ gemäß Figur 8 schwingt. Würde man nun die Betriebsfrequenz $f_1$ innerhalb des vierten Betriebsfrequenzbereiches auf die untere Bereichsgrenze, nach Figur 2 also

eine Betriebsfrequenz $f_1 = 30$ Hz, einstellen, so erscheint in unmittelbarer Nähe der Resonanzfrequenz $f_{res}$ nun die dreizehnte Oberschwingung.

Damit aber beim Durchfahren der einzelnen Steuerkennlinien der Parallelschwingkreis nicht ständig von unterschiedlichen Oberschwingungen angeregt wird, wird der bzw. die Schaltwinkel $\alpha_1$ bzw. $\alpha_1$ und $\alpha_2$ bzw. $\alpha_1$, $\alpha_2$ und $\alpha_3$ der einzelnen Modulations-Moden und damit die Impulsflanken frequenzabängig mit dem Faktor $f_1/f_{res}$ verstellt.

Der Kennlinie der Figur 6 kann bei einem Faktor von $f_1/f_{res} = 50/440 = 0,11$ ein Schaltwinkel $\alpha_1 = 7°$ entnommen werden. Bei einem Faktor von $f_1/f_{res} = 40/440 = 0,09$ verringert sich der Schaltwinkel $\alpha_1$ auf 5,5°. Verringert man die Betriebsfrequenz $f_1$ auf 30 Hz, so ergibt sich ein Faktor von $f_1/f_{res} = 30/440 = 0,068$, wodurch der Schaltwinkel $\alpha_1$ nach der Kennlinie nur noch 4,3° betragen darf, wenn die Resonanzschwingung ausreichend gedämpft sein soll.

Somit kann man mit diesem Steuerverfahren innerhalb eines Betriebsfrequenzbereiches den bzw. die Schaltwinkel $\alpha_1$ bzw. $\alpha_1$ und $\alpha_2$ bzw. $\alpha_1$, $\alpha_2$ und $\alpha_3$ der Modulations-Moden und damit die Impulsflanken des Umrichterstromes $I_R$ in Abhängigkeit der Betriebsfrequenz verstellen, wodurch die Oberschwingungen innerhalb des Betriebsbereiches ausreichend unterdrückt werden.

**Patentansprüche**

1. Steuerverfahren zur Dämpfung von Resonanzschwingungen eines Parallelschwingkreises für einen Pulswechselrichter (6) eines Stromzwischenkreisumrichters, wobei der Pulswechselrichter (6) abschaltbare Stromrichterventile (V1, ..., V6) enthält und mit einer induktiven und einer kapazitiven Last (8, 10) verknüpft ist, wobei diese induktive und kapazitive Last (8, 10) den Parallelschwingkreis bilden, dessen Resonanzfrequenz ($f_{res}$) einem Vielfachen der Betriebsfrequenz ($f_1$) des Pulswechselrichters (6) entspricht, und wobei der Pulswechselrichter (6) nach vorbestimmten abgespeicherten Modulations-Moden gesteuert wird, **dadurch gekennzeichnet,** daß mittels einer Betriebsfrequenz ($f_1$) eines Umrichterstromes ($I_R$) ein Modulations-Mode aus mehreren abgespeicherten Modulations-Moden ausgewählt wird, und daß in Abhängigkeit eines gebildeten Faktors ($f_1/f_{res}$) und des ausgewählten Modulations-Modes Schaltwinkel ($\alpha_1$, $\alpha_2$, ..., $\alpha_n$) mittels abgespeicherter, vorbestimmter Schaltwinkelkennlinien betriebsfrequenzabhängig bestimmt werden, mit denen dann die Steuerzeiten für den Pulswechselrichter (6) erzeugt werden.

2. Steuerverfahren nach Anspruch 1, **dadurch gezeichnet,** daß die Schaltwinkelkennlinien für eine 3-fach-Pulsung mittels folgender Gleichungen

$$\alpha_{1n} = 60 \, f_1/f_{res} \text{ für } 0 \leq f_1/f_{res} \leq 0{,}19$$
$$\alpha_{1n} = 11{,}4° \text{ für } f_1/f_{res} > 0{,}19$$
$$\alpha_{1o} = 1{,}2\alpha_{1n}$$
$$\alpha_{1u} = 0{,}8\alpha_{1n}$$

mit

$\alpha_{1n} = $ Näherungsschaltwinkelkennlinie

$\alpha_{1o} = $ obere Grenzschaltwinkelkennlinie

$\alpha_{1u} = $ untere Grenzschaltwinkelkennlinie

ermittelt werden.

3. Steuerverfahren nach Anspruch 1, **dadurch gezeichnet,** daß die Schaltwinkelkennlinien für eine 5-fach-Pulsung mittels folgender Gleichungen

$$\alpha_{1n} = 98 \, f_1/f_{res} \text{ für } 0 \leq f_1/f_{res} \leq 0{,}12$$
$$\alpha_{1n} = 11{,}8° \text{ für } f_1/f_{res} > 0{,}12$$
$$\alpha_{2n} = 51{,}5° \, f_1/f_{res} - 114(f_1/f_{res})^2 \text{ für } 0 \leq f_1/f_{res} \leq 0{,}2$$
$$\alpha_{2n} = 5{,}74° \text{ für } f_1/f_{res} > 0{,}2$$
$$\alpha_{1o} = 1{,}2 \cdot \alpha_{1n}$$
$$\alpha_{1u} = 0{,}8 \cdot \alpha_{1n}$$
$$\alpha_{2o} = 1{,}2 \cdot \alpha_{2n}$$
$$\alpha_{2u} = 0{,}8 \cdot \alpha_{2n}$$

mit

$\alpha_{1n} = $ Näherungsschaltwinkelkennlinie

$\alpha_{1o} = $ obere Grenzschaltwinkelkennlinie

$\alpha_{1u} = $ untere Grenzschaltwinkelkennlinie

ermittelt werden.

4. Steuerverfahren nach Anspruch 1, **dadurch gezeichnet,** daß die Schaltwinkelkennlinien für eine 7-fach-Pulsung mittels folgender Gleichungen

$$\alpha_{1n} = 79{,}4 \, f_1/f_{res} - 210(f_1/f_{res})^2 \text{ für } 0 \leq f_1/f_{res} \leq 0{,}16$$
$$\alpha_{1n} = 7{,}3° \text{ für } f_1/f_{res} > 0{,}16$$
$$\alpha_{2n} = 113 f_1/f_{res} - 141(f_1/f_{res})^2 \text{ für } 0 \leq f_1/f_{res} \leq 0{,}15$$
$$\alpha_{2n} = 14{,}75° - 6{,}5 \, f_1/f_{res} \text{ für } f_1/f_{res} > 0{,}15$$
$$\alpha_{3n} = 33 \, f_1/f_{res} - 70(f_1/f_{res})^2 \text{ für } 0 \leq f_1/f_{res} \leq 0{,}18$$
$$\alpha_{3n} = 3{,}7° \text{ für } f_1/f_{res} > 0{,}18$$
$$\alpha_{1o} = 1{,}2 \cdot \alpha_{1n}$$
$$\alpha_{2o} = 1{,}2 \cdot \alpha_{2n}$$
$$\alpha_{3o} = 1{,}2 \cdot \alpha_{3n}$$
$$\alpha_{1u} = 0{,}8 \cdot \alpha_{1n}$$
$$\alpha_{2u} = 0{,}8 \cdot \alpha_{2n}$$
$$\alpha_{3u} = 0{,}8 \cdot \alpha_{3n}$$

mit

$\alpha_{1n} = $ Näherungsschaltwinkelkennlinie

$\alpha_{1o} = $ obere Grenzschaltwinkelkennlinie

$\alpha_{1u} = $ untere Grenzschaltwinkelkennlinie

ermittelt werden.

5. Steuersatz (12) zur Durchführung des Steuerverfahren nach Anspruch 1 für einen Pulswechselrichter (6) eines Stromzwischenkreisumrichters, wobei der Pulswechselrichter (6) abschaltbare Stromrichterventile (V1, ..., V6) enthält und mit einer induktiven und einer kapazitiven Last (8, 10) verknüpft ist, wobei diese induktive und kapazitive Last (8, 10) den Parallelschwingkreis bilden, dessen Resonanzfrequenz $(f_{res})$ einem Vielfachen der Betriebsfrequenz $(f_1)$ des Pulswechselrichters (6) entspricht, wobei der Pulswechselrichter (6) nach vorbestimmten abgespeicherten Modulations-Moden gesteuert wird, **dadurch gekennzeichnet,** daß einer Einrichtung (26) zur Erzeugung von Steuerzeiten ein mehrere Tabellen (20, 22, 24) enthaltener Speicher (18) vorgeschaltet ist, dessen einer Eingang mit dem Ausgang einer Einrichtung (14) zur Kennung eines Betriebsfrequenzbereiches und dessen anderer Eingang mit dem Ausgang eines Quotientenbildners (16) verbunden sind, und daß am Eingang der Einrichtung (14) zur Kennung eines Betriebsfrequenzbereiches eine Betriebsfrequenz $(f_1)$ ansteht, die ebenfalls am ersten Eingang des Quotientenbildners (16) ansteht, wobei an seinem zweiten Eingang eine Resonanzfrequenz $(f_{res})$ des gebildeten Resonanzkreises ansteht.

6. Steuersatz (12) nach Anspruch 5, **dadurch gekennzeichnet,** daß als Steuersatz (12) ein Mikrocomputer vorgesehen ist, dem die Betriebsfrequenz $(f_1)$ und die Resonanzfrequenz $(f_{res})$ zugeführt sind.

**Claims**

1. Control process for attenuating resonance oscillations of a parallel oscillating circuit for a pulse inverter (6) of a current-source inverter, with the pulse inverter (6) containing disconnectable rectifier valves (V1, ..., V6) and being linked to an inductive and a capacitive load (8, 10), with this inductive and capacitive load (8, 10) forming the parallel oscillating circuit, the resonance frequency $(f_{res})$ of which corresponds to a multiple of the operating frequency $(f_1)$ of the pulse inverter (6), and with the pulse inverter (6) being controlled according to predetermined stored modulation modes, characterized in that by means of an operating frequency $(f_1)$ of a converter current $(I_R)$ a modulation mode is selected from several stored modulation modes, and in that, in dependence upon a formed factor $(f_1/f_{res})$ and the selected modulation mode, switching angles $(\alpha_1, \alpha_2, ..., \alpha_n)$ are determined by means of stored, predetermined switching-angle characteristics in a manner dependent upon the operating frequency, with which the control times for the pulse inverter (6) are then produced.

2. Control process according to claim 1, characterized in that the switching-angle characteristics for a threefold pulsing are determined by means of the following equations

$\alpha_{1n} = 60 \, f_1/f_{res}$ for $0 \le f_1/f_{res} \le 0.19$
$\alpha_{1n} = 11.4°$ for $f_1/f_{res} > 0.19$
$\alpha_{1o} = 1.2\alpha_{1n}$
$\alpha_{1u} = 0.8\alpha_{1n}$

where
$\alpha_{1n} = $ proximity switching-angle characteristic
$\alpha_{1o} = $ upper limiting switching-angle characteristic
$\alpha_{1u} = $ lower limiting switching-angle characteristic.

3. Control process according to claim 1, characterized in that the switching-angle characteristics are determined for a fivefold pulsing by means of the following equations

$\alpha_{1n} = 98 \, f_1/f_{res}$ for $0 \le f_1/f_{res} \le 0.12$
$\alpha_{1n} = 11.8°$ for $f_1/f_{res} > 0.12$
$\alpha_{2n} = 51.5° \, f_1/f_{res}-114(f_1/f_{res})^2$ for $0 \le f_1/f_{res} \le 0.2$
$\alpha_{2n} = 5.74°$ for $f_1/f_{res} > 0.2$
$\alpha_{1o} = 1.2 \cdot \alpha_{1n}$
$\alpha_{1u} = 0.8 \cdot \alpha_{1n}$
$\alpha_{2n} = 1.2 \cdot \alpha_{2n}$
$\alpha_{2u} = 0.8 \cdot \alpha_{2n}$

where
$\alpha_{1n} = $ proximity switching-angle characteristic
$\alpha_{1o} = $ upper limiting switching-angle characteristic
$\alpha_{1u} = $ lower limiting switching-angle characteristic.

4. Control process according to claim 1, characterized in that the switching-angle characteristics for a sevenfold pulsing are determined by means of the following equations

$\alpha_{1n} = 79.4 \, f_1/f_{res}-210(f_1/f_{res})^2$ for $0 \le f_1/f_{res} \le 0.16$
$\alpha_{1n} = 7.3°$ for $f_1/f_{res} > 0.16$

$\alpha_{2n} = 113f_1/f_{res}-141(f_1/f_{res})^2$ for $0 \le f_1/f_{res} \le 0.15$
$\alpha_{2n} = 14.75° \, -6.5 \, f_1/f_{res}$ for $f_1/f_{res} > 0.15$
$\alpha_{3n} = 33 \, f_1/f_{res}-70(f_1/f_{res})^2$ for $0 \le f_1/f_{res} \le 0.18$
$\alpha_{3n} = 3.7°$ for $f_1/f_{res} > 0.18$
$\alpha_{1o} = 1.2 \cdot \alpha_{1n}$
$\alpha_{2o} = 1.2 \cdot \alpha_{2n}$
$\alpha_{3o} = 1.2 \cdot \alpha_{3n}$
$\alpha_{1u} = 0.8 \cdot \alpha_{1n}$
$\alpha_{2u} = 0.8 \cdot \alpha_{2n}$
$\alpha_{3u} = 0.8 \cdot \alpha_{3n}$

where
$\alpha_{1n} = $ proximity switching-angle characteristic
$\alpha_{1o} = $ upper limiting switching-angle characteristic
$\alpha_{1u} = $ lower limiting switching-angle characteristic.

5. Trigger equipment (12) for carrying out the control process according to claim 1 for a pulse inverter (6) of a current-source inverter, with the pulse inverter (6) containing disconnectable rectifier valves (V1, ..., V6) and being linked to an inductive and a capacitive load (8, 10), with this inductive and capacitive load (8, 10) forming the parallel oscillating circuit, the resonance frequency $(f_{res})$ of which corresponds to a multiple of the operating frequency $(f_1)$ of the pulse inverter (6), with the pulse inverter (6) being controlled according to predetermined stored modulation modes, characterized in that a memory (18) containing several tables (20, 22, 24) is connected in series with a device (26) for producing control times, the one input of the memory being connected to the output of a device (14) for the characteristic of an operating-frequency range and the other input of the memory being connected to the output of a quotient former (16), and in that an operating frequency $(f_1)$ is applied to the input of the device (14) for the characteristic of an operating-frequency range, which operating frequency is likewise applied to the first input of the quotient former (16), with a resonance frequency $(f_{res})$ of the formed resonance circuit being applied to its second input.

6. Trigger equipment (12) according to claim 5, characterized in that a microcomputer is provided as trigger equipment (12), to which the operating frequency $(f_1)$ and the resonance frequency $(f_{res})$ are supplied.

**Revendications**

1. Procédé de commande pour l'atténuation d'oscillations de résonance d'un circuit oscillant parallèle pour un onduleur impulsionnel (6) d'un convertisseur de courant à circuit intermédiaire, du type dans lequel l'onduleur impulsionnel (6) comporte des soupapes électriques de conversion de courant (V1, ..., V6) blocables, et est combiné avec une charge inductive et une charge capacitive (8, 10), du type dans lequel cette charge inductive et cette charge capacitive (8, 10) forment le circuit oscillant parallèle, dont la fréquence de résonance ($f_{res}$) correspond à un multiple de la fréquence de service ($f_1$) de l'onduleur impulsionnel (6), et du type dans lequel l'onduleur impulsionnel (6) est commandé suivant des modes de modulation mémorisés et prédéterminés, caractérisé en ce qu'au moyen d'une fréquence de service ($f_1$) d'un courant de conversion ($I_R$), un mode de modulation est sélectionné parmi plusieurs modes de modulation mémorisés, et qu'en fonction d'un facteur de forme ($f_1/f_{res}$) et du mode de modulation sélectionné, de l'angle d'attaque ($\alpha_1$, $\alpha_2$, ..., $\alpha_n$) sont déterminés en fonction de la fréquence de service, au moyen de courbes caractéristiques des angles d'attaque prédéterminées et mémorisées, avec lesquelles sont produits les temps de commande pour l'onduleur impulsionnel (6).

2. Procédé de commande suivant la revendication 1, caractérisé en ce que les courbes caractéristiques de l'angle d'attaque pour une triple impulsion sont déterminées au moyen des équations suivantes

$\alpha_{1n}$ = 60 $f_1/f_{res}$ pour 0 < $f_1/f_{res}$ < 0,19
$\alpha_{1n}$ = 11,4° pour $f_1/f_{res}$ > 0,19
$\alpha_{1o}$ = 1,2 $\alpha_{1n}$
$\alpha_{1u}$ = 0,8 $\alpha_{1n}$

avec

$\alpha_{1n}$ =     courbe caractéristique approchée de l'angle d'attaque
$\alpha_{1o}$ =     courbe caractéristique limite supérieure de l'angle d'attaque
$\alpha_{1u}$ =     courbe caractéristique limite inférieure de l'angle d'attaque.

3. Procédé de commande suivant la revendication 1, caractérisé en ce que les courbes caractéristiques de l'angle d'attaque pour une quintuple impulsion sont déterminées au moyen des équations suivantes

$\alpha_{1n}$ = 98 $f_1/f_{res}$ pour 0 < $f_1/f_{res}$ <0,12
$\alpha_{1n}$ = 11,8° pour $f_1/f_{res}$ > 0,12
$\alpha_{2n}$ = 51,5° $f_1/f_{res}$ - 114($f_1/f_{res}$)² pour 0 < $f_1/f_{res}$ < 0,2
$\alpha_{2n}$ = 5,74° pour $f_1/f_{res}$ > 0,2

$\alpha_{1o}$ = 1,2•$\alpha_{1n}$
$\alpha_{1u}$ = 0,8•$\alpha_{1n}$
$\alpha_{2n}$ = 1,2•$\alpha_{2n}$
$\alpha_{2u}$ = 0,8•$\alpha_{2n}$

avec

$\alpha_{1n}$ =     courbe caractéristique approchée de l'angle d'attaque
$\alpha_{1o}$ =     courbe caractéristique limite supérieure de l'angle d'attaque
$\alpha_{1u}$ =     courbe caractéristique limite inférieure de l'angle d'attaque.

4. Procédé de commande suivant la revendication 1, caractérisé en ce que les courbes caractéristiques de l'angle d'attaque pour une septuple impulsion, sont déterminées au moyen des équations suivantes

$\alpha_{1n}$ = 79,4 $f_1/f_{res}$ - 210($f_1/f_{res}$)² pour 0<$f_1/f_{res}$< 0,16
$\alpha_{1n}$ = 7,3° pour $f_1/f_{res}$ > 0,16
$\alpha_{2n}$ = 113 $f_1/f_{res}$ - 141($f_1/f_{res}$)² pour 0 < $f_1/f_{res}$ <0,15
$\alpha_{2n}$ = 14,75° - 6,5 $f_1/f_{res}$ pour $f_1/f_{res}$ > 0,15
$\alpha_{3n}$ = 33 $f_1/f_{res}$ - 70($f_1/f_{res}$)² pour 0 < $f_1/f_{res}$ <0,18
$\alpha_{3n}$ = 3,7° pour $f_1/f_{res}$ > 0,18
$\alpha_{1o}$ = 1,2•$\alpha_{1n}$
$\alpha_{2o}$ = 1,2•$\alpha_{2n}$
$\alpha_{3o}$ = 1,2•$\alpha_{3n}$
$\alpha_{1u}$ = 0,8•$\alpha_{1n}$
$\alpha_{2u}$ = 0,8•$\alpha_{2n}$
$\alpha_{3u}$ = 0,8•$\alpha_{3n}$

avec

$\alpha_{1n}$ =     courbe caractéristique approchée de l'angle d'attaque
$\alpha_{1o}$ =     courbe caractéristique limite supérieure de l'angle d'attaque
$\alpha_{1u}$ =     courbe caractéristique limite inférieure de l'angle d'attaque.

5. Elément de déclenchement (12) pour la mise en oeuvre du procédé de commande suivant la revendication 1 pour un onduleur impulsionnel (6) d'un convertisseur de courant à circuit intermédiaire, du type dans lequel l'onduleur impulsionnel (6) comporte des soupapes électriques de conversion de courant (V1, ..., V6) blocages et est combiné avec une charge inductive et une charge capacitive (8, 10), du type dans lequel cette charge inductive et cette charge capacitive (8, 10) forment le circuit oscillant parallèle, dont la fréquence résonance ($f_{res}$) correspond à un multiple de la fréquence de service ($f_1$) de l'onduleur impulsionnel (6), et du type dans lequel l'onduleur impulsionnel (6) est commandé suivant des modes de modulation mémorisés et prédéterminés, caractérisé en ce qu'à un dispositif (26) de production du temps de commande, est branchée, en amont, une mémoire (18), qui comporte plusieurs tableaux (20, 22, 24), dont une entrée est reliée à la sortie d'un dispositif (14) de caractérisation d'une zone de fréquence de service et dont l'autre entrée est reliée à la sortie d'un dispositif de formation de quotient (16), et qu'à l'entrée du dispositif (14) de caractérisation d'une zone de fréquence de service, est présente une fréquence de service ($f_1$) qui est présente également à la première entrée du dispositif de formation de quotient (16), une fréquence de résonance ($f_{res}$) du circuit de résonnance formé étant présente à sa deuxième entrée.

6. Elément de déclenchement (12) suivant la revendication 5, caractérisé en ce qu'il est prévu comme élément de déclenchement (12), un micro-ordinateur auquel sont envoyées la fréquence de service ($f_1$) et la fréquence de résonance ($f_{res}$).

FIG 1

FIG 2

FIG 3

FIG 4

FIG 5

11

FIG 6

FIG 7

FIG 8

FIG 9